(19) **Europäisches Patentamt European Patent Office Office européen des brevets**

(11) **EP 3 812 835 B1**

(12) **EUROPEAN PATENT SPECIFICATION**

(45) Date of publication and mention
of the grant of the patent:
**03.05.2023 Bulletin 2023/18**

(21) Application number: **20791964.8**

(22) Date of filing: **31.03.2020**

(51) International Patent Classification (IPC):
**G02F 1/153** *(2006.01)*          **G02F 1/161** *(2006.01)*
**G02F 1/015** *(2006.01)*

(52) Cooperative Patent Classification (CPC):
**E06B 3/6722; G02B 26/02; G02B 27/56;
G02F 1/015**

(86) International application number:
**PCT/CN2020/082410**

(87) International publication number:
**WO 2020/211640 (22.10.2020 Gazette 2020/43)**

(54) **THERMAL CONTROL SKIN CAPABLE OF REGULATING EQUIVALENT EMISSIVITY BY MEANS
OF VOLTAGE AND APPLICATION THEREOF IN SPACECRAFT**

**PROPHYLAKTISCHES ODER THERAPEUTISCHES MITTEL GEGEN DURCH OXIDATIVEN
STRESS VERURSACHTE KRANKHEITEN**

**PEAU DE RÉGULATION THERMIQUE APTE À RÉGULER L'ÉMISSIVITÉ ÉQUIVALENTE AU
MOYEN D'UNE TENSION ET SON APPLICATION DANS UN VAISSEAU SPATIAL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2019 CN 201910299103**

(43) Date of publication of application:
**28.04.2021 Bulletin 2021/17**

(73) Proprietor: **Harbin Institute Of Technology
Harbin, Heilongjiang 150001 (CN)**

(72) Inventors:
• **ZHAO, Junming**
**Harbin, Heilongjiang 150001 (CN)**
• **XU, Deyu**
**Harbin, Heilongjiang 150001 (CN)**
• **QIU, Jun**
**Harbin, Heilongjiang 150001 (CN)**

(74) Representative: **Meyer-Dulheuer MD Legal
Patentanwälte PartG mbB
Hanauer Landstr. 287-289
60314 Frankfurt am Main (DE)**

(56) References cited:
**CN-A- 106 206 830          CN-A- 108 866 483
CN-A- 109 870 863          CN-A- 110 079 774
CN-B- 106 113 848          CN-U- 207 964 092
US-A1- 2017 297 750          US-A1- 2017 297 750**

• **Papadakis Georgia T ET AL: "Subscriber
Gate-tunable near-field heat transfer", 1155
Sixteenth Street N.W, 31 January 2019
(2019-01-31), pages 1-15, XP055838736,
Retrieved from the Internet:
URL:https://www.osti.gov/servlets/purl/156 6583
[retrieved on 2021-09-07]**
• **WATJEN JESSE I ET AL: "Near-field radiative
heat transfer between doped-Si parallel plates
separated by a spacing down to 200 nm",
APPLIED PHYSICS LETTERS, A I P PUBLISHING
LLC, US, vol. 109, no. 20, 15 November 2016
(2016-11-15), XP012213768, ISSN: 0003-6951,
DOI: 10.1063/1.4967384 [retrieved on 2016-11-15]**

## Description

### Field of the Invention

The present invention relates to the technical field of thermal control devices, in particular to a thermal control skin capable of regulating equivalent emissivity by means of voltage and an application thereof in a spacecraft.

### Background of the Invention

The spacecraft thermal control technology uses various surface materials and temperature control devices to maintain a desired temperature environment for a spacecraft and internal components thereof, which is of great significance for ensuring the normal operation of the internal components of the spacecraft. Among various thermal control technologies such as electrochromic, thermotropic phase-transition, and MEMS shutter technologies, electrochromic thermal control uses the electrochromic principle to change optical and thermal properties of a material by means of an applied voltage, thereby adjusting reflectivity or emissivity of a thermal control device, and has the advantages of real-time active regulation, a large emissivity regulating range, low energy consumption, etc. Papadakis Georgia T ET AL: "Subscriber Gate-tunable near-field heat transfer",1155 Sixteenth Street N.W, 31 January 2019 (2019-01-31), pages 1-15 discloses a device for adjusting the near-field radiation heat transer.

In spite of the large emissivity regulating range, electrochromic thermal control must use an electrochromic material, which is selected from a small range of materials. Moreover, many electrochromic materials have poor chemical stability and cannot withstand erosion caused by high vacuum, ultraviolet radiation, atomic oxygen and the like, so that the spatial stability of the thermal control device cannot be guaranteed. Regarding the accuracy of regulation, as an intermediate state between a "faded state" and a "colored state" of the electrochromic material is unstable, continuous and accurate regulation of the emissivity cannot be achieved.

In view of the above situation, the present invention is proposed.

### Summary of the Invention

A technical problem to be solved by the present invention is to provide a thermal control skin with good adaptability to a space environment, capable of regulating equivalent emissivity by means of voltage, and in another aspect, to provide a thermal control skin that is not limited to electrochromic materials only and has a wide emissivity regulating range.

To solve the above technical problem, the present invention provides the following technical solutions:

A thermal control skin capable of regulating equivalent emissivity by means of voltage includes, from bottom to top, a substrate, an inner layer, an outer layer and a protective layer, with spacers being provided between the inner layer and the outer layer, wherein the spacers cause a vacuum gap having a pitch on the micro-nano level to be formed between the inner layer and the outer layer; and

> a metal-insulator-semiconductor structure is included in the inner layer and/or the outer layer, and a direct-current adjustable voltage is applied between semiconductor and metal in the structure; and
> the protective layer has high infrared emissivity or has both high infrared emissivity and low solar spectrum absorptivity.

Preferably, the spacers cause the vacuum gap having a pitch of no more than 10 $\mu$m to be formed between the inner layer and the outer layer; preferably, the spacers cause the vacuum gap having a pitch of no more than 1 $\mu$m to be formed between the inner layer and the outer layer.

Preferably, a semiconductor layer in the metal-insulator-semiconductor structure is adjacent to the vacuum gap.

Preferably, in the metal-insulator-semiconductor structure, a metal layer is an Ag film and/or an Al film, an insulator layer is a SiC film and/or a $Si_3N_4$ film, and a semiconductor layer is an ITO film and/or a doped silicon film.

The protective layer is an optical solar reflector.

Preferably, a ratio of the solar spectrum absorptivity to the infrared emissivity is no more than 0.336, preferably no more than 0.12.

Optionally, the inner layer is plated on an upper surface of the substrate by magnetron sputtering, vacuum evaporation, sol-gel or pulsed laser deposition; and/or the outer layer is plated on a lower surface of the protective layer by magnetron sputtering, vacuum evaporation, sol-gel or pulsed laser deposition.

Optionally, the inner layer includes at least one film layer; and/or the outer layer includes at least one film layer.

Optionally, the spacer is an array structure prepared by an etching method; optionally, the spacer is a silicon dioxide cylindrical array prepared by etching.

The thermal control skin provided by the present invention may be applied to spacecrafts.

Beneficial effects

The above-mentioned technical solutions of the present invention have the following advantages:

The present invention does not directly use the characteristic that the emissivity of the material changes with the applied voltage, but introduces near-field thermal radiation, and near-field heat transfer characteristics of the thermal control skin are changed by adjusting the applied voltage, to achieve the purpose of regulating the equivalent emissivity, so that materials that can be used in the present invention are not limited to electrochromic materials, and any semiconductor materials can be used so long as a carrier concentration can change with the applied voltage, so the space stability is higher.

The equivalent emissivity of the thermal control skin provided by the present invention can be regulated actively and continuously by adjusting the voltage, and near-field radiation is used to amplify a heat flux of radiation heat transfer and increase the emissivity regulating range.

In the technical solutions of the present invention, the material of the outermost layer can be chosen more freely, which is beneficial to ensuring the spatial stability of the thermal control skin.

**Brief Description of the Drawings**

Fig. 1 is a structural diagram of the thermal control skin provided by the present invention; reference numerals in the figure: 1: substrate; 2: inner layer; 3: outer layer; 4: protective layer; 5: spacer; 6: vacuum gap;

Fig. 2 shows real and imaginary parts of an ITO dielectric function where $N=10^{17}cm^{-3}$;

Fig. 3 shows real and imaginary parts of an ITO dielectric function where $N=10^{20}cm^{-3}$;

Fig. 4 is a diagram of equivalent emissivity variations of embodiment 1;

Fig. 5 is a diagram of equivalent emissivity variations of embodiment 2;

Fig. 6 is a diagram of equivalent emissivity variations of embodiment 3;

Fig. 7 is a diagram of equivalent emissivity variations of embodiment 4;

Fig. 8 is a diagram of equivalent emissivity variations of embodiment 5;

Fig. 9 is a diagram of equivalent emissivity variations of embodiment 6; and

Fig. 10 is a diagram of equivalent emissivity variations of embodiment 7.

**Detailed Description of the Embodiments**

To make the objects, technical solutions and advantages of the present invention clearer, the technical solutions of the present invention will be described clearly and completely below in conjunction with the embodiments of the present invention. Obviously, the described embodiments are only a part of the embodiments of the present invention, and not all the embodiments. Based on the embodiments in the present invention, all other embodiments obtained by those of ordinary skill in the art without creative work fall into the protection scope of the present invention.

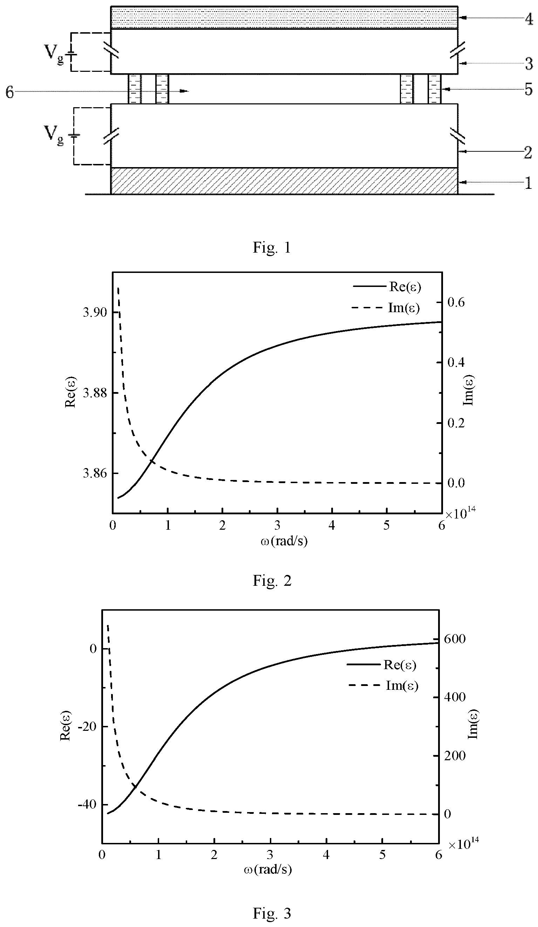

The present invention provides a thermal control skin capable of regulating equivalent emissivity by means of voltage. Referring to Fig. 1, the thermal control skin provided by the present invention includes, from bottom to top (with respect to Fig. 1), a substrate 1, an inner layer 2, an outer layer 3 and a protective layer 4, with spacers 5 being provided between the inner layer 2 and the outer layer 3, wherein the spacers 5 cause a vacuum gap 6 having a pitch on the micro-nano level to be formed between the inner layer 2 and the outer layer 3; a metal-insulator-semiconductor structure is included in the inner layer 2 and/or the outer layer 3, and a direct-current adjustable voltage is applied between semiconductor and metal in the structure; and the protective layer 4 has high infrared emissivity or has both high infrared emissivity and low solar spectrum absorptivity.

The present invention does not directly use the characteristic that the emissivity of the material changes with the applied voltage, but introduces near-field thermal radiation, and near-field heat transfer characteristics of the thermal control skin are changed by adjusting the applied voltage, to achieve the purpose of regulating the equivalent emissivity, so that materials that can be used in the present invention are not limited to electrochromic materials, and any semiconductor materials can be used so long as a carrier concentration can change with the applied voltage, so the space stability is higher. The emissivity of the thermal control skin provided by the present invention can be regulated actively and continuously by adjusting the voltage, and near-field radiation is used to amplify a heat flux of radiation heat transfer and increase the emissivity regulating range.

Working principles of the present invention are as follows.

1. Mathematical model of equivalent emissivity

When the thermal condition of a spacecraft changes, the heat balance for an outer structure (the substrate 1 and inner layer 2 may be regarded as the inner, and the outer layer 3 and the protective layer 4 may be regarded as the outer) is broken, and heat transfer is required to reach a new thermal balance. There are mainly three ways of heat transfer:

(1) A heat flux $Q_{near}$ in the form of near-field heat radiation transferred from an inner structure (including the substrate 1 and the inner layer 2) to the outer structure, determined by the following formula:

$$Q_{near} = \frac{1}{\pi^2} \int_0^\infty d\omega [\Theta(\omega, T_H) - \Theta(\omega, T_S)] \int_0^\infty s(\omega, \beta) d\beta,$$

where $s$ is an exchange function, including contributions of a propagating wave and an evanescent wave, that is $s = s_{prop} + s_{even}$,

$$s_{prop}(\omega, \beta) = \frac{\beta(1-\rho_{01}^s)(1-\rho_{02}^s)}{4\left|1 - R_{01}^s R_{02}^s e^{i2\gamma_0 d}\right|^2} + \frac{\beta(1-\rho_{01}^p)(1-\rho_{02}^p)}{4\left|1 - R_{01}^p R_{02}^p e^{i2\gamma_0 d}\right|^2},$$

$$s_{even}(\omega, \beta) = \frac{\beta \operatorname{Im}(R_{01}^s)\operatorname{Im}(R_{02}^s)e^{-2\operatorname{Im}(\gamma_0)d}}{\left|1 - R_{01}^s R_{02}^s e^{-2\operatorname{Im}(\gamma_0)d}\right|^2} + \frac{\beta \operatorname{Im}(R_{01}^p)\operatorname{Im}(R_{02}^p)e^{-2\operatorname{Im}(\gamma_0)d}}{\left|1 - R_{01}^p R_{02}^p e^{-2\operatorname{Im}(\gamma_0)d}\right|^2},$$

in the formula, $T_H$ and $T_S$ are inner layer temperature and outer layer temperature respectively. As the inner structure is closely connected to the spacecraft, with conduction thermal resistance and contact thermal resistance being negligible (because they are much smaller than radiation heat transfer resistance), its temperature is approximately equal to the temperature of the spacecraft. The outer structure temperature $T_S$ is an adaptive temperature determined by a thermal balance.

(2) Thermal radiation $Q_{out}$ from the outer layer to outer space, $Q_{out} = \varepsilon\sigma\left(T_S^4 - T_L^4\right)$ where $\varepsilon$ is infrared emissivity of the protective layer 4, and $T_L$=3K is cosmic background temperature.

(3) Solar radiation $Q_{abs}$ absorbed by the outer surface of the outer structure, $Q_{abs}=\alpha S$, where $\alpha$ is solar spectrum absorptivity of the protective layer 4, and S is a solar constant. Obviously, when the spacecraft is working in a shady environment free from solar radiation, $Q_{abs}=0$.

When a new thermal balance is reached, the outer structure reaches an adaptive temperature $T_S$, which should satisfy the thermal balance equation:

$$Q_{near} + Q_{abs} = Q_{out}.$$

At this point, based on

$$Q_{out} = \varepsilon_{eff}\sigma\left(T_H^4 - T_L^4\right) \Rightarrow \varepsilon_{eff} = \frac{Q_{out}}{\sigma\left(T_H^4 - T_L^4\right)},$$

equivalent emissivity $\varepsilon_{eff}$ of the thermal control skin of the present invention can be determined.

Further, a mathematical model of equivalent emissivity is: when the thermal condition of a spacecraft changes, the heat balance for an outer structure (the substrate 1 and inner layer 2 may be regarded as the inner, and the outer layer 3 and the protective layer 4 may be regarded as the outer) is broken, and heat transfer is required to reach a new thermal balance. There are mainly three ways of heat transfer:

(1) A heat flux $Q_{near}$ in the form of near-field heat radiation transferred from an inner structure (including the substrate 1 and the inner layer 2) to the outer structure, determined by the following formula:

$$Q_{near} = \frac{1}{\pi^2}\int_0^\infty d\omega[\Theta(\omega,T_H) - \Theta(\omega,\ T_S)]\int_0^\infty s(\omega,\beta)d\beta,$$

wherein

$$s = \begin{cases} s_{prop}, \beta < \omega/c \\ s_{even}, \beta > \omega/c \end{cases},$$

$$s_{prop}(\omega,\beta) = \frac{\beta(1-\rho_{01}^s)(1-\rho_{02}^s)}{4\left|1 - R_{01}^s R_{02}^s\, \mathrm{e}^{i2\gamma_0 d}\right|^2} + \frac{\beta(1-\rho_{01}^p)(1-\rho_{02}^p)}{4\left|1 - R_{01}^p R_{02}^p\, \mathrm{e}^{i2\gamma_0 d}\right|^2},$$

$$s_{even}(\omega,\beta) = \frac{\beta\,\mathrm{Im}(R_{01}^s)\,\mathrm{Im}(R_{02}^s)e^{-2\mathrm{Im}(\gamma_0)d}}{\left|1 - R_{01}^s R_{02}^s e^{-2\mathrm{Im}(\gamma_0)d}\right|^2} + \frac{\beta\,\mathrm{Im}(R_{01}^p)\,\mathrm{Im}(R_{02}^p)e^{-2\mathrm{Im}(\gamma_0)d}}{\left|1 - R_{01}^p R_{02}^p e^{-2\mathrm{Im}(\gamma_0)d}\right|^2},$$

that is, when $\beta < \omega/c$, $s_{even} = 0$; and when $\beta > \omega > /c$, $s_{prop} = 0$.

It is to be noted that in the model before and/or after supplementation, $\omega$ is an angular frequency, and $\Theta(\omega, T) = \hbar\omega/[\exp(\hbar\omega/k_B T) -1]$ is average energy of Planck's oscillator at the angular frequency $\omega$ and temperature $T$, where $\hbar$ is $1/2\pi$ of Planck's constant, and $k_B$ is Boltzmann's constant; $\beta$ is a component of a wave vector in the horizontal direction, and $\gamma_0$ is a component of the wave vector perpendicular to the interface in vacuum, and may be calculated as follows: $\gamma_0 = \sqrt{k_0^2 - \beta^2}$, $k_0 = \omega/c$; $R_{01}^j$ and $R_{02}^j$ are respectively equivalent reflection coefficients between the vacuum and a medium 1 (above the vacuum gap) and a medium 2 (below the vacuum gap) in a polarization state of $j(j=s, p)$, and are calculated by a transfer matrix method, $\rho_{0i}^j$ is equivalent reflectivity, and $\rho_{0i}^j = \left|R_{0i}^j\right|^2$; $d$ is a vacuum distance between the inner layer and the outer layer; and i is an imaginary unit, and Im() is an imaginary part of a complex number. $T_H$ and $T_S$ are inner layer temperature and outer layer temperature respectively. As the inner structure is closely connected to the spacecraft, with conduction thermal resistance and contact thermal resistance being negligible (because they are much smaller than radiation heat transfer resistance), its temperature is approximately equal to the temperature of the spacecraft. The outer structure temperature $Ts$ is an adaptive temperature determined by thermal balance.

(2) Thermal radiation $Q_{out}$ from the outer layer to outer space, $Q_{out} = \varepsilon\sigma\left(T_S^4 - T_L^4\right)$ where $\varepsilon$ is infrared emissivity of the protective layer 4, and $T_L = 3K$ is cosmic background temperature.

(3) Solar radiation $Q_{abs}$ absorbed by the outer surface of the outer structure, $Q_{abs} = \alpha S$, where $\alpha$ is solar spectrum absorptivity of the protective layer 4, and $S$ is a solar constant. Obviously, when the spacecraft is working in a shady environment free from solar radiation, $Q_{abs} = 0$.

When a new thermal balance is reached, the outer structure reaches an adaptive temperature *Ts,* which should satisfy the thermal balance equation:

$$Q_{near} + Q_{abs} = Q_{out}.$$

At this point, based on

$$Q_{out} = \varepsilon_{eff}\sigma\left(T_H^4 - T_L^4\right) \Rightarrow \varepsilon_{eff} = \frac{Q_{out}}{\sigma\left(T_H^4 - T_L^4\right)},$$

equivalent emissivity $\varepsilon_{eff}$ of the thermal control skin of the present invention can be determined.

2. Principle of regulating near-field heat transfer by means of voltage

When the thermal condition of a spacecraft changes, the voltage is adjusted, and spatial distribution of carriers in a semiconductor film will change. The semiconductor layer may be divided into an active layer and a background layer according to carrier concentrations after the distribution change. A carrier concentration $N_B$ in the background layer is a certain value; and a carrier concentration in the active layer changes with the applied voltage. A relationship between a semiconductor plasma frequency $\omega_p$ and a carrier concentration of is:

$\omega_p = \sqrt{Ne^2 / \varepsilon_0 m^*}$ , and a change of the plasma frequency causes a change of a dielectric function of the active layer.

In the mathematical model before improvement, the entire semiconductor layer is simply divided into the background layer and the active layer, which is not accurate enough. Further, an improved mathematical model may be used to solve the spatial distribution of the carrier concentration, and is more accurate. Accordingly:

when the thermal condition of the spacecraft changes, the voltage is adjusted, so that potential distribution in the semiconductor film will change, which further causes a change in the spatial distribution of the carriers. The spatial distribution of the electric potential may be described by Poisson's equation:

$$\frac{d}{dx}\left(\varepsilon \frac{d\psi}{dx}\right) = -q\left[N_D - N_A + p(x) - n(x)\right],$$

where $\psi$ is the electric potential, $\varepsilon$ is a direct current dielectric constant, q is an electron charge quantity, *x* is a spatial position coordinate, and $N_D$, $N_A$, *p,* and *n* are a donor concentration, an acceptor concentration, an electron concentration, and a hole concentration respectively.

Solving the above Poisson equation can obtain gradient distribution of carrier concentration in the semiconductor layer. A change in the carrier concentration causes a change in the semiconductor plasma frequency, and a quantitative relationship therebetween is: $\omega_p = \sqrt{Ne^2 / \varepsilon_0 m^*}$ , and the change in the plasma frequency further leads to a change in the dielectric function of the active layer.

This phenomenon is further illustrated by using indium tin oxide (ITO) as an example. Figs. 2 and 3 show real and imaginary parts of a dielectric function of ITO when the carrier concentration is $10^{17}$cm$^{-3}$ and $10^{20}$ cm$^{-3}$ respectively. It can be seen with the increase of the carrier concentration, the real part of the dielectric function of ITO decreases, the imaginary part increases, and metal properties are enhanced. Other semiconductors, such as doped silicon, aluminum-doped zinc oxide (AZO), and doped silicon have similar changes. The change of the dielectric function directly influences near-field heat transfer characteristics. According to the mathematical model of equivalent emissivity, a change in the near-field heat flux will further cause a change in the equivalent emissivity, thus achieving the purpose of regulation.

## Vacuum gap 6

As the inner layer 2 and the outer layer 3 are separated by the spacers 5 to form the vacuum gap 6 with a pitch on the micro-nano level therebetween, heat transfer between the two parts above and below the vacuum gap 6 (with respect to Fig. 1) can be achieved by near-field radiation. It is to be noted that the "pitch" mentioned in description of the technical solutions of the present invention refers to a vertical distance between the parts above and below the vacuum gap 6. As shown in Fig. 1, in design, an ideal state between the substrate 1, the inner layer 2, the outer layer 3, and the protective layer 4 is parallel to each other. The "micro-nano level" is a general expression, and means to be less than a characteristic wavelength of thermal radiation, which is $9.7\mu m$ at 300K. During research, the inventor has found that the magnitude of the pitch of the vacuum gap 6 influences a heat flux of heat transfer between the inner and outer parts (the substrate 1 and inner layer 2 may be regarded as the inner, and the outer layer 3 and the protective layer 4 may be regarded as the outer). When the pitch is larger, the heat transfer efficiency decreases, so that the emissivity regulation range of the composite structure becomes smaller. When the pitch is too large, heat transfer by near-field radiation cannot be achieved. Based on the above findings, the pitch of the vacuum gap 6 in the technical solutions of the present invention is no more than 10 $\mu m$. For example, it may be 50 nm to 10 $\mu m$. Preferably, it is no more than 1 $\mu m$, such as 10 nm to 500 nm. For example, it may be 10 nm, 50 nm, 100 nm, 150 nm, 200 nm, 300 nm, 400nm, or 500nm. On the premise that micro-nano fabrication technology can be achieved, the smaller the vacuum gap 6 is, the better it is, and the smaller the vacuum gap, the larger the emissivity regulating range.

In some embodiments, the spacer 5 may be an array structure prepared by an etching method. Optionally, the spacer 5 is a silicon dioxide cylindrical array and/or a fused silica array prepared by etching, and may also be SU-8 (an existing negative, epoxy-resin, near-ultraviolet photoresist). The etching method may be an existing one, such as ultraviolet etching or wet etching.

## Metal-insulator-semiconductor structure

In the technical solutions provided by the present invention, the metal-insulator-semiconductor structure may be provided in the inner layer 2, or in the outer layer 3, or the metal-insulator-semiconductor structure may also be provided in both the inner layer 2 and the outer layer 3. The change of the carrier distribution in the semiconductor layer with the voltage achieves a regulating function. The closer to the vacuum gap, the greater the contribution to near-field heat transfer, and the better the regulating effect. Therefore, in each case described above, a preferred technical solution is that a semiconductor layer in the metal-insulator-semiconductor structure is adjacent to the vacuum gap 6.

In the metal-insulator-semiconductor structure, a metal layer may be an existing metal film, preferably an Al film and/or an Ag film; an insulator layer may be a film layer of an existing insulating material, preferably a $Si_3N_4$ film and/or a SiC film; and the semiconductor layer may be a film layer of an existing semiconductor material, such as an ITO film and/or a doped silicon film.

## Protective layer 4

The outermost layer is designed with the protective layer 4 in the present invention. The protective layer 4 has high infrared emissivity or has both high infrared emissivity and low solar spectrum absorptivity. It is to be noted that if the spacecraft only works in a shady environment, it only requires high infrared emissivity of the protective layer 4, and in principle, the closer the emissivity is to 1, the better the regulating effect is. If the spacecraft needs to work in a sunny environment, the protective layer 4 needs to have both high infrared emissivity and low solar spectrum absorptivity. In this case, in principle, the closer the infrared emissivity $\varepsilon$ is to 1, and the closer the solar spectrum absorptivity $\alpha$ is to 0, the better the effect is. Preferably, the protective layer 4 used here has high infrared emissivity and low solar spectrum absorptivity, and a ratio of the solar spectrum absorptivity to the infrared emissivity, that is, an absorptivity-emissivity ratio $\alpha_S/\varepsilon$ is no more than 0.336, which is calculated at 300 K, according to $Q_{near}>0$, that is, $Q_{abs} \leq Q_{out}$. If the absorptivity-emissivity ratio exceeds this value, the contribution of near-field heat transfer to the heat balance is 0, or less than zero (indicating that an upper plate heats a lower plate at this time, which will cause a temperature rise of the lower plate and controlled components, and the emissivity regulation becomes meaningless). Therefore, this value is a maximum allowed value of the absorptivity-emissivity ratio to ensure the emissivity regulating effect during work in sunny exposure. More preferably, the absorptivity-emissivity ratio $\alpha_S/\varepsilon$ is no more than 0.12. In design, a suitable material of the protective layer 4 may be selected according to the application scenario of the thermal control skin. Of course, in a preferred technical solution, the protective layer 4 may be an optical solar reflector. The optical solar reflector has high infrared emissivity and low solar spectrum absorptivity, and can resist the erosion of atomic oxygen, ultraviolet radiation, electron proton radiation, and other harsh space environments, can solve the problem of the space adaptability of thermal control devices, and does not have much influence on the emissivity regulating ability. In this way, the present invention may be used in both a shady environment and a sunny environment. It is to be noted that the optical solar reflector is a passive temperature control coating element, with a structure of the prior art, which is not described in detail in the present invention. During manufacturing, an existing optical solar reflector meeting the design requirement may be directly purchased and used in the present invention.

Inner layer 2 and outer layer 3

In some embodiments, the inner layer 2 may be plated on an upper surface of the substrate 1 (a positional relationship of the upper surface is with respect to Fig. 1) by magnetron sputtering, vacuum evaporation, sol-gel or pulsed laser deposition. The outer layer 3 may be plated on a lower surface of the protective layer 4 (a positional relationship of the lower surface is with respect to Fig. 1) by magnetron sputtering, vacuum evaporation, sol-gel or pulsed laser deposition.

In the present invention, the inner layer 2 includes at least one film layer, and may be a single-layer or multi-layer structure. Similarly, the outer layer 3 includes at least one film layer, and may be a single-layer or multilayer structure.

If only the inner layer 2 contains a metal-insulator-semiconductor structure, the inner layer 2 is of course a multilayer film structure. In this case, the outer layer 3 may have a multilayer film structure or a single-layer film structure. Similarly, if only the outer layer 3 contains a metal-insulator-semiconductor structure, the outer layer 3 is of course a multilayer film structure. In this case, the inner layer 2 may be a multilayer film structure or a single-layer film structure. If both the inner layer 2 and the outer layer 3 contain a metal-insulator-semiconductor structure, the inner layer 2 and the outer layer 3 are each undoubtedly a multilayer film structure.

Specific embodiments of the present invention are as follows:

Embodiment 1

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

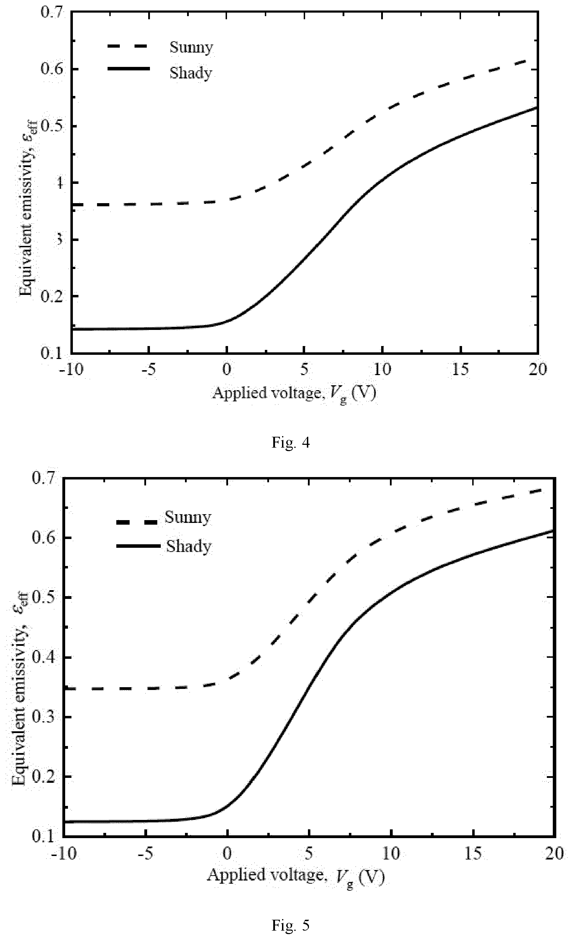

The substrate 1 is $SiO_2$. The inner layer 2 is a metal-insulator-semiconductor (MIS) structure, a semiconductor layer of which is adjacent to the vacuum gap, wherein a metal layer is Al with a thickness of $1\mu m$; an insulator layer is $Si_3N_4$ with a thickness of 100nm and a breakdown voltage of 20V; and the semiconductor layer is doped silicon with an initial doping concentration of $10^{16}cm^{-3}$. The outer layer 3 is composed of an Al film substrate with a thickness of $10\mu m$ and a doped silicon film with a thickness of 50nm and a doping concentration of $10^{20}cm^{-3}$, and is plated on an inner surface of the optical solar reflector 4; CMO-based OSR produced by British company Point-source is used as the optical solar reflector 4, with infrared emissivity $\varepsilon$=0.87, and solar spectrum absorptivity $\alpha_s$=0.085. The spacer 5 is a $SiO_2$ cylindrical array with a height of 50 nm. The SiOz cylindrical array is manufactured by deep-ultraviolet lithography and reactive ion etching technologies, so that the vacuum gap 6 of 50 nm is formed between the inner layer 2 and the outer layer 3. With an applied voltage adjusted from -10 V to 20V (semiconductor connected to the positive electrode, and metal connected to the negative electrode), variations of equivalent emissivity (calculated by using the improved mathematical model) with the voltage at 300 K are shown in Fig. 4.

Embodiment 2

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the outer layer 3 is a metal-insulator-semiconductor structure.

The substrate 1 is $SiO_2$. The inner layer 2 is composed of an Al film substrate with a thickness of $10 \mu m$ and an ITO film with a thickness of 50 nm and a doping concentration of $10^{20}cm^{-3}$. The outer layer 3 is an MIS structure, a semiconductor layer of which is adjacent to the vacuum gap, wherein a metal layer is Al with a thickness of $1\mu m$; an insulator layer is $Si_3N_4$ with a thickness of 100nm and a breakdown voltage of 20V; and the semiconductor layer is an ITO film with an initial doping concentration of $10^{16}cm^{-3}$. CMO-based OSR produced by British company Point-source is used as the optical solar reflector 4, with infrared emissivity $\varepsilon$=0.87, and solar spectrum absorptivity $\alpha_s$=0.085. The spacer 5 is a $SiO_2$ cylindrical array with a height of 50 nm. The $SiO_2$ cylindrical array is manufactured by deep-ultraviolet lithography and reactive ion etching technologies, so that the vacuum gap 6 of 50 nm is formed between the inner layer 2 and the outer layer 3. With an applied voltage adjusted from -10 V to 20 V (semiconductor connected to the positive electrode, and metal connected to the negative electrode), variations of the equivalent emissivity (calculated by using the improved mathematical model) with the voltage at 300 K are shown in Fig. 5.

#### Embodiment 3

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 and the outer layer 3 are each a metal-insulator-semiconductor structure.

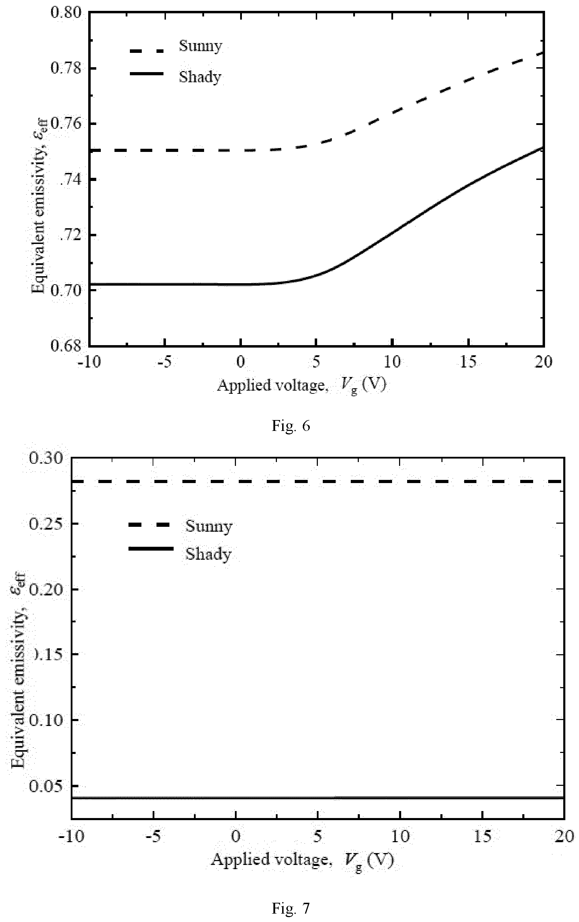

The substrate 1 is $SiO_2$. The inner layer 2 and the outer layer 3 are MIS structures symmetrical to each other, a semiconductor layer of which is adjacent to the vacuum gap, wherein a metal layer is Al with a thickness of $1\mu m$; an insulator layer is $Si_3N_4$ with a thickness of 100nm and a breakdown voltage of 20V; and the semiconductor layer is ITO with an initial doping concentration of $10^{16}cm^{-3}$. The outer layer 3 is plated on an inner surface of the optical solar reflector 4, which is CMO-based OSR produced by British company Point-source, with infrared emissivity $\varepsilon=0.87$, and solar spectrum absorptivity $\alpha_s=0.085$. The spacer 5 is a $SiO_2$ cylindrical array with a height of 100 nm. The $SiO_2$ cylindrical array is manufactured by deep-ultraviolet lithography and reactive ion etching technologies, so that the vacuum gap 6 of 100 nm is formed between the inner layer 2 and the outer layer 3. With applied voltages to the MIS on two sides being equal and changing synchronously, adjusted from -10 V to 20 V (semiconductor connected to the positive electrode, and metal connected to the negative electrode), variations of the equivalent emissivity (calculated by using the improved mathematical model) with the voltage at 300 K are shown in Fig. 6.

#### Embodiment 4

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

The substrate 1 is $SiO_2$. The inner layer 2 is a metal-insulator-semiconductor (MIS) structure, a semiconductor layer of which is adjacent to the vacuum gap, wherein a metal layer is Al with a thickness of $1\mu m$; an insulator layer is $Si_3N_4$ with a thickness of 100nm and a breakdown voltage of 20V; and the semiconductor layer is doped silicon with an initial doping concentration of $10^{16}cm^{-3}$. The outer layer 3 is composed of an Al film substrate with a thickness of $10\mu m$ and a doped silicon film with a thickness of 50nm and a doping concentration of $10^{20}cm^{-3}$, and is plated on an inner surface of the optical solar reflector 4; CMO-based OSR produced by British company Point-source is used as the optical solar reflector 4, with infrared emissivity $\varepsilon=0.87$, and solar spectrum absorptivity $\alpha s=0.085$. The spacer 5 is a $SiO_2$ cylindrical array with a height of $1.1\mu m$. The SiOz cylindrical array is manufactured by deep-ultraviolet lithography and reactive ion etching technologies, so that the vacuum gap 6 of $1.1\mu m$ is formed between the inner layer 2 and the outer layer 3. With an applied voltage adjusted from -10 V to 20 V (semiconductor connected to the positive electrode, and metal connected to the negative electrode), variations of equivalent emissivity (calculated by using the improved mathematical model) with the voltage at 300 K are shown in Fig. 7, with data respectively as below:

Sunny:

| Voltage/V | Equivalent emissivity |
|---|---|
| -10 | 0.282423 |
| -5 | 0.282423 |
| -2 | 0.282423 |
| 1 | 0.282423 |
| 6 | 0.282432 |
| 8 | 0.28244 |
| 10 | 0.282449 |
| 12 | 0.282458 |
| 15 | 0.282471 |
| 20 | 0.282492 |

Shady:

| Voltage/V | Equivalent emissivity |
|---|---|
| -10 | 0.040718 |
| 1 | 0.040719 |
| 10 | 0.040789 |

(continued)

| Voltage/V | Equivalent emissivity |
|-----------|----------------------|
| 20 | 0.040891 |

It can be seen that the adjustment of the voltage has a very small effect on the emissivity. This example shows that the vacuum gap 6 should not exceed 1 $\mu$m.

### Embodiment 5

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

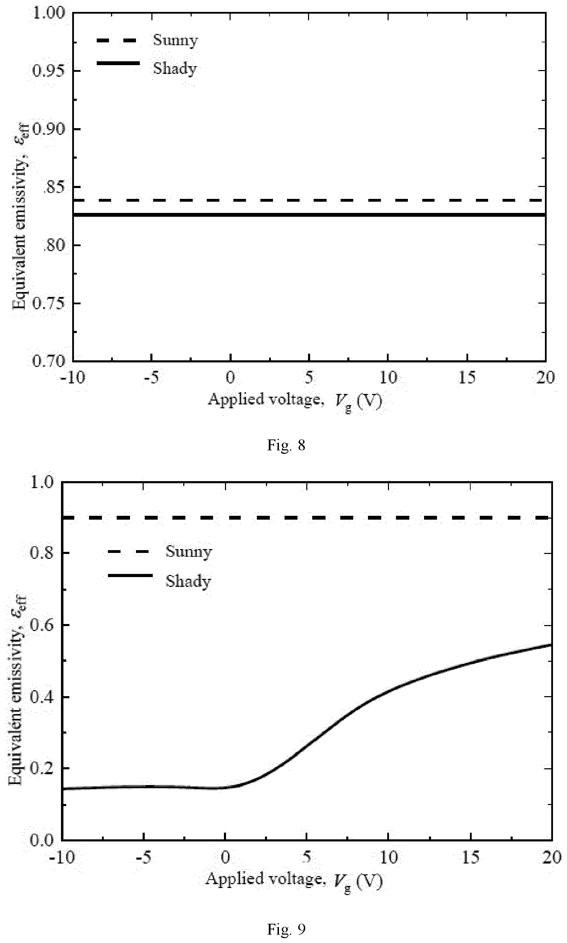

The substrate 1 is $Si_3N_4$. The inner layer 2 is a metal-insulator-semiconductor (MIS) structure, a metal layer of which is adjacent to the vacuum gap, wherein the metal layer is Al with a thickness of 50nm; an insulator layer is $Si_3N_4$ with a thickness of 100nm and a breakdown voltage of 20V; and the semiconductor layer is doped silicon with an initial doping concentration of $10^{16}$cm$^{-3}$. The outer layer 3 is composed of an Al film substrate with a thickness of 10$\mu$m and a doped silicon film with a thickness of 50nm and a doping concentration of $10^{20}$cm$^{-3}$, and is plated on an inner surface of the optical solar reflector 4; CMO-based OSR produced by British company Point-source is used as the optical solar reflector 4, with infrared emissivity $\varepsilon$=0.87, and solar spectrum absorptivity $\alpha$s=0.085. The spacer 5 is a $SiO_2$ cylindrical array with a height of 50 nm. The $SiO_2$ cylindrical array is manufactured by deep-ultraviolet lithography and reactive ion etching technologies, so that the vacuum gap 6 of 50 nm is formed between the inner layer 2 and the outer layer 3. With an applied voltage adjusted from -10 V to 20 V (semiconductor connected to the positive electrode, and metal connected to the negative electrode), variations of the equivalent emissivity (calculated by using the improved mathematical model) with the voltage at 300 K are shown in Fig. 8. It can be seen that the adjustment of the voltage has a very small effect on the emissivity. This example shows that the semiconductor layer should be adjacent to the vacuum gap 6.

### Embodiment 6

Embodiment 6 is a simulation experiment. According to a heat balance equation in the description

$$Q_{near} + Q_{abs} = Q_{out},$$

To achieve contribution of near-field heat transfer to the heat balance, it needs to satisfy $Q_{near}$> 0, then:

$$Q_{abs} \leq Q_{out} \Rightarrow \alpha_S S \leq \varepsilon\sigma\left(T_S^4 - T_L^4\right) \leq \varepsilon\sigma\left(T_H^4 - T_L^4\right) \Rightarrow \frac{\alpha_S}{\varepsilon} \leq \frac{\sigma\left(T_H^4 - T_L^4\right)}{S}.$$

When $T_H$=300 K, $T_L$= 3 K, and $S$=1367 W/m$^2$ are substituted to obtain $\alpha_S/\varepsilon\leq$ 0.336.

Therefore, this embodiment simulates variations of equivalent emissivity with a voltage in an extreme situation of $\alpha_S/\varepsilon$=0.336 (other conditions are same as in embodiment 1). With an applied voltage adjusted from -10 V to 20 V (semiconductor connected to the positive electrode, and metal connected to the negative electrode), variations of the equivalent emissivity (calculated by using the improved mathematical model) with the voltage at 300 K are shown in Fig. 9. It can be seen when $\alpha_S/\varepsilon$ is exactly equal to 0.336, adjusting the voltage in a sunny condition will not influence the emissivity at all, which is always consistent with the emissivity $\varepsilon$ of the optical solar reflector. Of course, high absorptivity does not influence the emissivity regulating effect under a shady working condition.

### Embodiment 7

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

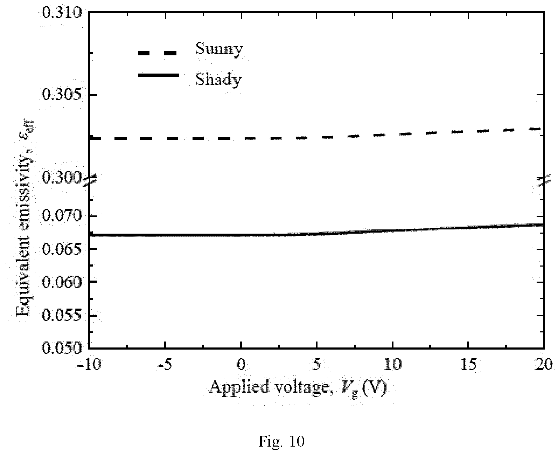

The substrate 1 is SiO$_2$. The inner layer 2 is a metal-insulator-semiconductor (MIS) structure, a semiconductor layer of which is adjacent to the vacuum gap, wherein a metal layer is Al with a thickness of 1$\mu$m; an insulator layer is Si$_3$N$_4$ with a thickness of 100nm and a breakdown voltage of 20V; and the semiconductor layer is doped silicon with an initial doping concentration of 10$^{16}$cm$^{-3}$. The outer layer 3 is composed of an Al film substrate with a thickness of 10$\mu$m and a doped silicon film with a thickness of 50nm and a doping concentration of 10$^{20}$cm$^{-3}$, and is plated on an inner surface of the optical solar reflector 4; CMO-based OSR produced by British company Point-source is used as the optical solar reflector 4, with infrared emissivity $\varepsilon$=0.87, and solar spectrum absorptivity $\alpha$s=0.085. The spacer 5 is a SiO$_2$ cylindrical array with a height of 500 nm. The SiO$_2$ cylindrical array is manufactured by deep-ultraviolet lithography and reactive ion etching technologies, so that the vacuum gap 6 of 500 nm is formed between the inner layer 2 and the outer layer 3. With an applied voltage adjusted from -10 V to 20V (semiconductor connected to the positive electrode, and metal connected to the negative electrode), variations of the equivalent emissivity (calculated by using the improved mathematical model) with the voltage at 300 K are shown in Fig. 10.

Embodiment 8

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

Specifically, the material of the substrate 1 is SiO2; the inner layer 2 is a metal-insulator-semiconductor structure, in which a metal layer is an Ag film with a thickness of 1 $\mu$m, an insulator layer is a SiC film with a thickness of 1 $\mu$m and a breakdown voltage of 300V, and a semiconductor layer is an ITO film with a thickness of 10nm, the semiconductor layer in the structure being adjacent to the vacuum gap 6, and a positive DC adjustable voltage being applied between the semiconductor layer and the metal layer; the outer layer 3 is composed of an Al film substrate with a thickness of 10$\mu$m and an ITO film with a thickness of 10nm, and is plated on an inner surface of the optical solar reflector 4; CMO-based OSR produced by British company Point-source is used as the optical solar reflector 4, with infrared emissivity $\varepsilon$=0.87 and solar spectrum absorptivity $\alpha_s$=0.085, this outermost layer as the optical solar reflector 4 being a dense ITO film having high spatial stability, and also excellent electrical conductivity, and an anti-static effect; the spacer 5 is a SiO$_2$ cylindrical array with a height of 50nm, the SiO$_2$ cylindrical array being manufactured by deep-ultraviolet lithography and reactive ion etching technologies, and the SiO$_2$ cylindrical array being arranged in a thermal control area, such that a vacuum gap 6 of 50nm is formed between the inner layer 2 and the outer layer 3. The film layers in the thermal control skin are coated by magnetron sputtering.

Calculations indicate that when the positive DC voltage applied between the semiconductor and the metal changes continuously from 2.23V to 70.53V: (1) under a shady condition, the equivalent emissivity (calculated by using the mathematical model before improvement) changes continuously from 0.45208 to 0.74992; and (2) under a sunny condition, the equivalent emissivity (calculated by using the mathematical model before improvement) changes continuously from 0.55863 to 0.78154.

Embodiment 9

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the inner layer 2 is a metal-insulator-semiconductor structure.

Specifically, the material of the substrate 1 is SiO$_2$; the inner layer 2 is a metal-insulator-semiconductor structure, in which a metal layer is an Ag film with a thickness of 1 $\mu$m, an insulator layer is a SiC film with a thickness of 1 $\mu$m and a breakdown voltage of 300V, and a semiconductor layer is an ITO film with a thickness of 10nm, the semiconductor layer in the structure being adjacent to the vacuum gap 6, and a positive DC adjustable voltage being applied between the semiconductor layer and the metal layer; the outer layer 3 is an Al film substrate with a thickness of 10$\mu$m and a p-type doped silicon film with a thickness of 10nm and a doping concentration of 10$^{21}$cm$^{-3}$, and is plated on an inner surface of the optical solar reflector 4; CMO-based OSR produced by British company Point-source is used as the optical solar reflector 4, with infrared emissivity $\varepsilon$=0.87, and solar spectral absorptivity $\alpha_s$=0.085, this outermost layer as the selected optical solar reflector 4 being a dense ITO film having high spatial stability, and also excellent electrical conductivity, and an anti-static effect; the spacer 5 is a SiO$_2$ cylindrical array with a height of 50nm, the SiO$_2$ cylindrical array being manufactured by deep-ultraviolet lithography and reactive ion etching technologies, the SiO$_2$ cylindrical array being arranged in a thermal control area, such that a vacuum gap 6 of 650nm is formed between the inner layer 2 and the outer layer 3. The film layers in the thermal control skin are coated by magnetron sputtering.

Calculations indicate that when the positive DC voltage applied between the semiconductor and the metal changes continuously from 2.23V to 223.04V: (1) under a shady condition, the equivalent emissivity (calculated by using the mathematical model before improvement) changes continuously from 0.38149 to 0.52173; and (2) under a sunny condition, the equivalent emissivity (calculated by using the mathematical model before improvement) changes continuously from 0.52471 to 0.63346.

Embodiment 10

A thermal control skin includes, from bottom to top, a substrate 1, an inner layer 2, an outer layer 3 and an optical solar reflector 4, with spacers 5 being provided between the inner layer 2 and the outer layer 3, wherein the spacers 5 cause a vacuum gap 6 having a pitch on the micro-nano level to be formed between the inner layer 2 and the outer layer 3, and the outer layer 3 is a metal-insulator-semiconductor structure.

Specifically, the material of the substrate 1 is $SiO_2$; the inner layer 2 is composed of an Al substrate with a thickness of $10\mu m$ and an ITO film with a thickness of 10nm; the outer layer 3 is a metal-insulator-semiconductor structure, in which a metal layer is an Ag film with a thickness of 1 $\mu m$, and is plated on an inner surface of the optical solar reflector 5, an insulator layer is a SiC film with a thickness of 1 $\mu m$ and a breakdown voltage of 300V, and a semiconductor layer is an ITO film with a thickness of 10nm, the semiconductor layer in the structure being adjacent to the vacuum gap 6, and a positive DC adjustable voltage being applied between the semiconductor layer and the metal layer; CMO-based OSR produced by British company Point-source is used as the optical solar reflector 4, with infrared emissivity $\varepsilon=0.87$ and solar spectrum absorptivity $\alpha_s=0.085$; the spacer 5 is a $SiO_2$ cylindrical array with a height of 50nm, the $SiO_2$ cylindrical array being manufactured by deep-ultraviolet lithography and reactive ion etching technologies, and the $SiO_2$ cylindrical array being arranged in a thermal control area, such that a vacuum gap 6 of 50nm is formed between the inner layer 2 and the outer layer 3. The film layers in the thermal control skin are coated by magnetron sputtering.

Calculations indicate that when the positive DC voltage applied between the semiconductor and the metal changes continuously from 2.23V to 70.53V: (1) under a shady condition, the equivalent emissivity (calculated by using the mathematical model before improvement) changes continuously from 0.53069 to 0.75055; and (2) under a sunny condition, the equivalent emissivity (calculated by using the mathematical model before improvement) changes continuously from 0.54127 to 0.77818.

In summary, the emissivity of the thermal control skin provided by the present invention can be regulated actively and continuously by adjusting the voltage, and near-field radiation is used to amplify a heat flux of radiation heat transfer and increase the emissivity regulating range, so the thermal control skin may be applied to spacecrafts.

Finally, it is to be noted that the above embodiments are only used for illustrating rather than limiting the technical solutions of the present invention. Although the present invention is described in detail with reference to the foregoing embodiments, those of ordinary skill in the art should understand that they still can make modifications to the technical solutions disclosed in the foregoing embodiments.

**Claims**

1. A thermal control skin capable of regulating equivalent emissivity by means of voltage, comprising: from bottom to top, a substrate (1), an inner layer (2), an outer layer (3) and a protective layer (4), with spacers (5) being provided between the inner layer and the outer layer (3), wherein the spacers (5) cause a vacuum gap (6) having a pitch on the micro-nano level to be formed between the inner layer (2) and the outer layer (3);

   a metal-insulator-semiconductor structure is comprised in the inner layer (2) and/or the outer layer (3), and a direct-current adjustable voltage is applied between semiconductor and metal in the structure;
   **characterized in that** the protective layer (4) is an optical solar reflector and has high infrared emissivity or has both high infrared emissivity and low solar spectrum absorptivity.

2. The thermal control skin according to claim 1, wherein the spacers (5) cause the vacuum gap (6) having a pitch of no more than 10 $\mu m$ to be formed between the inner layer (2) and the outer layer (3); preferably, the spacers (5) cause the vacuum gap (6) having a pitch of no more than 1 $\mu m$ to be formed between the inner layer (2) and the outer layer (3).

3. The thermal control skin according to claim 1, wherein a semiconductor layer in the metal-insulator-semiconductor structure is adjacent to the vacuum gap (6).

4. The thermal control skin according to claim 1, wherein in the metal-insulator-semiconductor structure, a metal layer is an Ag film and/or an Al film, an insulator layer is a SiC film and/or a $Si_3N_4$ film, and a semiconductor layer is an ITO film and/or a doped silicon film.

5. The thermal control skin according to claim 1, wherein a ratio of the solar spectrum absorptivity to the infrared emissivity is no more than 0.336, preferably no more than 0.12.

6. The thermal control skin according to any one of claims 1 to 5, wherein the inner layer (2) is plated on an upper surface of the substrate (1) by magnetron sputtering, vacuum evaporation, sol-gel or pulsed laser deposition; and/or the outer layer (3) is plated on a lower surface of the protective layer (4) by magnetron sputtering, vacuum evaporation, sol-gel or pulsed laser deposition.

7. The thermal control skin according to any one of claims 1 to 6, wherein the inner layer (2) comprises at least one film layer; and/or the outer layer (3) comprises at least one film layer.

8. The thermal control skin according to any one of claims 1 to 7, wherein the spacer (5) is an array structure prepared by etching; optionally, the spacer (5) is a silicon dioxide cylindrical array prepared by etching.

9. An application of the thermal control skin according to any one of claims 1 to 8 in a spacecraft.

**Patentansprüche**

1. Wärmeregulierungshaut mit der Fähigkeit, die äquivalente Emissivität mittels Spannung zu regulieren, umfassend: von unten nach oben einen Träger (1), eine Innenschicht (2), eine Außenschicht (3) und eine Schutzschicht (4), wobei Abstandhalter (5) zwischen der Innenschicht und der Außenschicht (3) bereitgestellt sind, wobei die Abstandhalter (5) bewirken, dass ein Vakuumspalt (6) mit einem Abstand auf Mikronanoebene zwischen der Innenschicht (2) und der Außenschicht (3) gebildet wird;

   wobei in der Innenschicht (2) und/oder der Außenschicht (3) eine Metallisolator-Halbleiter-Struktur enthalten ist und eine einstellbare Gleichstromspannung zwischen dem Halbleiter und dem Metall in der Struktur angelegt wird;
   **dadurch gekennzeichnet, dass** die Schutzschicht (4) ein optischer Solarreflektor ist und eine hohe Infrarotemissivität aufweist oder sowohl eine hohe Infrarotemissivität als auch eine geringe Absorptionsfähigkeit im Solarspektrum aufweist.

2. Wärmeregulierungshaut nach Anspruch 1, wobei der Abstandhalter (5) bewirkt, dass der Vakuumspalt (6) mit einem Abstand von nicht mehr als 10 $\mu$m zwischen der Innenschicht (2) und der Außenschicht (3) gebildet wird; wobei der Abstandhalter (5) vorzugsweise bewirkt, dass der Vakuumspalt (6) mit einem Abstand von nicht mehr als 1 $\mu$m zwischen der Innenschicht (2) und der Außenschicht (3) gebildet wird.

3. Wärmeregulierungshaut nach Anspruch 1, wobei eine Halbleiterschicht in der Metall-Isolator-Halbleiter-Struktur an den Vakuumspalt (6) angrenzt.

4. Wärmeregulierungshaut nach Anspruch 1, wobei in der Metall-Isolator-Halbleiter-Struktur eine Metallschicht eine Ag-Folie und/oder eine Al-Folie ist, eine Isolationsschicht eine SiC-Folie und/oder eine $Si_3N_4$-Folie ist und eine Halbleiterschicht eine ITO-Folie und/oder Folie aus dotiertem Silizium ist.

5. Wärmeregulierungshaut nach Anspruch 1, wobei ein Verhältnis der Absorptionsfähigkeit im Solarspektrum zur Infrarotemissivität nicht größer als 0,336, vorzugsweise nicht größer als 0,12 ist.

6. Wärmeregulierungshaut nach einem der Ansprüche 1 bis 5, wobei die Innenschicht (2) durch Magnetronsputtern, Vakuumaufdampfen, Sol-Gel oder gepulste Laserabscheidung auf eine obere Fläche des Trägers (1) plattiert ist; und/oder die Außenschicht (3) durch Magnetronsputtern, Vakuumaufdampfen, Sol-Gel oder gepulste Laserabscheidung auf eine untere Fläche der Schutzschicht (4) plattiert ist.

7. Wärmeregulierungshaut nach einem der Ansprüche 1 bis 6, wobei die Innenschicht (2) wenigstens eine Folienschicht umfasst; und/oder die Außenschicht (3) wenigstens eine Folienschicht umfasst.

8. Wärmeregulierungshaut nach einem der Ansprüche 1 bis 7, wobei der Abstandhalter (5) eine Array-Struktur ist, die durch Ätzen hergestellt ist; wobei der Abstandhalter (5) wahlweise ein zylindrisches Siliziumdioxid-Array ist, das durch Ätzen hergestellt ist.

9. Verwendung der Wärmeregulierungshaut nach einem der Ansprüche 1 bis 8 in einem Raumfahrzeug.

## Revendications

1. Un revêtement à contrôle thermique capable de réguler l'émissivité équivalente par moyen de tension, comprenant : du bas vers le haut, un substrat (1), une couche interne (2), une couche externe (3) et une couche protectrice (4), avec des espaceurs (5) agencés entre la couche interne et la couche externe (3), dans lequel les espaceurs (5) créent un interstice de vide (6) doté d'un pas au niveau micro-nano à former entre la couche interne (2) et la couche externe (3) ;

   une structure de métal-isolant-semiconducteur est comprise dans la couche interne (2) et/ou la couche externe (3), et une tension ajustable de courant continu est appliquée entre le semiconducteur et le métal dans la structure;
   **caractérisé en ce que** la couche protectrice (4) est un réflecteur solaire optique et est dotée d'une émissivité infrarouge élevée ou est dotée à la fois d'une émissivité infrarouge élevée et d'une absorption de bas spectre solaire.

2. Un revêtement à contrôle thermique selon la revendication 1, dans lequel les espaceurs (5) créent un interstice de vide (6) doté d'un pas maximum de 10 $\mu$m à former entre la couche interne (2) et la couche externe (3) ; préférablement, les espaceurs (5) créent un interstice de vide (6) doté d'un pas maximum de 1 $\mu$m à former entre la couche interne (2) et la couche externe (3).

3. Un revêtement à contrôle thermique selon la revendication 1, dans lequel une couche semiconductrice dans la structure de métal-isolant-semiconducteur est adjacente à l'interstice de vide (6).

4. Un revêtement à contrôle thermique selon la revendication 1, dans lequel dans la structure de métal-isolant-semiconducteur, la couche de métal est un film Ag et/ou un film Al, la couche isolante est un film SiC et/ou un film $Si_3N_4$, et la couche de semiconducteur est un film ITO et/ou un film dopé au silicium.

5. Un revêtement à contrôle thermique selon la revendication 1, dans lequel le rapport de l'absorption de bas spectre solaire à l'émissivité infrarouge est au maximum de 0,336, préférablement 0,12 au maximum.

6. Un revêtement à contrôle thermique selon l'une quelconque des revendications 1 à 5, dans lequel la couche interne (2) est plaquée sur une surface supérieure sur le substrat (1) par pulvérisation magnétron, évaporation sous vide, dépôt sol-gel ou ablation laser pulsée ; et/ou la couche externe (3) est plaquée sur une surface supérieure de la couche protectrice (4) par pulvérisation magnétron, évaporation sous vide, dépôt sol-gel ou ablation laser pulsée.

7. Un revêtement à contrôle thermique selon l'une quelconque des revendications 1 à 6, dans lequel la couche interne (2) comprend au moins une couche de film ; et/ou la couche externe (3) comprend au moins une couche de film.

8. Un revêtement à contrôle thermique selon l'une quelconque des revendications 1 à 7, dans lequel l'espaceur (5) est une structure de réseau préparée par attaque ; facultativement, l'espaceur (5) est un réseau cylindrique de dioxyde de silicium préparé par attaque.

9. Une application du revêtement à contrôle thermique selon l'une quelconque des revendications 1 à 8, sur un engin spatial.

Fig. 1

Fig. 2

Fig. 3

Fig. 4

Fig. 5

Fig. 6

Fig. 7

Fig. 8

Fig. 9

Fig. 10

# EP 3 812 835 B1

**REFERENCES CITED IN THE DESCRIPTION**

**Non-patent literature cited in the description**

- **PAPADAKIS GEORGIA T et al.** *Subscriber Gate-tunable near-field heat transfer,* 31 January 2019, 1-15